# EUROPÄISCHE PATENTSCHRIFT

(11) **EP 0 980 603 B1**
(45) Veröffentlichungstag und Bekanntmachung des Hinweises auf die Patenterteilung: **22.08.2001**
(21) Anmeldenummer: 98925528.6
(22) Anmeldetag: 04.05.1998
(51) Int. Cl.: H04B 5/00, H02B 1/28, H02J 5/00

(54) **STECKVERBINDUNG ZUR ENERGIE UND DATENÜBERTRAGUNG**
PLUG-AND-SOCKET CONNECTION
CONNECTEUR MALE-FEMELLE

(30) Priorität: 09.05.1997 DE 19719730
(43) Veröffentlichungstag der Anmeldung: 23.02.2000
(73) Patentinhaber: BARTEC Componenten und Systeme GmbH, 97980 Bad Mergentheim (DE)
(72) Erfinder: BÖHM, Alfred, D-94234 Viechtach (DE); BARLIAN, Reinhold, A., D-97980 Bad Mergentheim (DE); LANG, Rainer, D-97285 Röttingen (DE)
(74) Vertreter: Heim, Hans-Karl, Dipl.-Ing.
(86) Internationale Anmeldenummer: EP9802626
(87) Internationale Veröffentlichungsnummer: WO9852172

(56) Entgegenhaltungen:
- EP-A- 0 666 631
- DE-A- 4 033 052
- DE-A- 4 344 071
- DE-C- 19 522 166
- US-A- 4 543 455

## Beschreibung

Die Erfindung betrifft eine Steckverbindung gemäß Oberbegriff des Anspruches 1 sowie ein Energie- und Datenübertragungsverfahren gemäß Oberbegriff des Anspruches 18.

Eine vergleichbare Steckverbindung zur Energie- und Datenübertragung ist aus der DE 40 33 052 C2 bekannt.
Diese bekannte Steckverbindung weist zwar einen Übertrager mit Primär- und Sekundärteil auf, die auch miteinander trenn- und verwendbar sind. Auch hat das Primärteil eine Wandlereinrichtung zur Demodulation der von der Kraftmeßdose als Sensor zur Auswerteeinheit übertragenen Daten.
Diese bekannte Steckverbindung ist jedoch nicht für einen explosionsgefährdeten Bereich bestimmt und auch dafür nicht ausgelegt, da z.B. keine Begrenzereinrichtungen für die zu übertragenden elektrischen Größen vorhanden sind.

In zahlreichen Anwendungsfällen ist es notwendig, Energie und Daten zu Verbrauchern in explosionsgefährdeten Bereichen zu übertragen. Unter Verbrauchern sind in diesem Sinne allgemein Sensoren und Aktoren zu verstehen. Beispielsweise seien hier Füllstandsmesser für Öl- oder Flüssiggastanks genannt.

In der Fachwelt sind verschiedene Transponderverfahren bekannt, bei welchen in explosionsgefährdeten Bereichen angeordnete Empfänger per Funkdaten- und Energieübertragung eigensicher angesteuert werden. Die Energie, die zum Zurücksenden einer Antwort des Empfängers notwendig ist, wird dabei ebenfalls-über die HF-Sendeleistung übertragen. Der Empfänger verfügt dafür über eine entsprechende Antenne. Die Leistung, die übertragen wird, ist jedoch so gering, daß damit im allgemeinen keine Sensoren oder Aktoren betrieben werden können.

Es gab daher bereits Vorschläge, die Energie- und Datenübertragung zu derartigen Sensoren oder auch Aktoren mit Bussystemen durchzuführen. Aus einem Vortrag von Herrn Cramer Nielsen anläßlich der "2nd International Conference on P-NET Fieldbus Systems" am 30. November 1992 und 1. Dezember 1992 in Deggendorf ist ein Feldbussystem für eigensicher explosionsgeschützt ausgeführte Verbraucher bekannt. Das gesamte Bussystem entspricht den Anforderungen "IS-16, Intrinsically Safe P-NET Bus". Es ist also vollständig in der Zündschutzart "Eigensicherheit" ausgeführt (zur Definition der unterschiedlichen Zündschutzarten siehe den Artikel "Meß- und regelungstechnische Anlagen in explosionsgefährdeten Bereichen" von R. Brandel und G. Schwarz in: "de/der elektromeister + deutsches elektrohandwerk", 6/85, Seiten 349 bis 352). Energie und Daten werden gemeinsam über eine zweiadrige Busleitung übertragen. Die zugehörige Steckverbindung arbeitet induktiv und weist zwei sich gegenüberliegende Spulen in Topfkernen auf. Die Leistungsfähigkeit dieses Bussystems ist jedoch aufgrund der Ausführung in der Zündschutzart "Eigensicherheit" nicht sehr hoch. Da diese Zündschutzart nur eine äußerst geringe elektrische Leistung zuläßt, ist es nur möglich, relativ wenige Verbraucher an das Bussystem anzuschließen. Insbesondere ist es ausgeschlossen, mit diesem Busleitungssystem neben eigensicher explosions-geschützt ausgeführten Verbrauchern auch Verbraucher mit einer anderen Zündschutzart als "Eigensicherheit" oder fehlender Zündschutzart und entsprechend erhöhten Leistungsaufnahmedaten zu versorgen. Die Flexibilität dieses Übertragungssystems ist somit sehr gering. Da Energie und Daten auf derselben Leitung übertragen werden, ist auch die maximale Informationsdichte des Bussystems reduziert. Weiterhin tritt durch Dispersion in Leitungen oder elektronischen Bauteilen eine Vermischung von Signalen ein. Abhilfe schafft hier lediglich eine Begrenzung der Anzahl der zu versorgenden Busknoten oder eine Verringerung der Datenübertragungs-Geschwindigkeit. Beide Maßnahmen sind jedoch äußerst unerwünscht.

Weiterhin ist auch aus der DE-43 44 071 A1 ein Übertragungssystem für explosionsgefährdete Bereiche bekannt. Auch bei diesem System ist das Bussystem eigensicher explosionsgeschützt ausgeführt und weist daher die gleichen Nachteile wie im vorherigen Absatz beschrieben auf.

Die EP 0 666 631 A2 offenbart ein Speisesystem für einen Feldbus in explosionsgefährdeten verfahrenstechnischen Anlagen. Energie und Daten werden über dasselbe Aderpaar übertragen. Auf dem Weg von einem Wartenbus bis zu Anschlußklemmen für eigensicher explosionsgeschützte Verbraucher sind Mittel zur Strom- und Spannungsbegrenzung räumlich getrennt angeordnet. Eines der Begrenzungsmittel ist in einem Verteiler unmittelbar vor den Anschlüssen für die Verbraucher angeordnet. Optional kann dieses Begrenzungsmittel fortfallen oder modifiziert werden, so daß auch Verbraucher, die in einer anderen Zündschutzart als "Eigensicherheit" oder ohne Zündschutzart ausgeführt sind, angeschlossen werden können. Nachteilig ist, daß für jeden Anschluß die maximal übertragbare elektrische Leistung festgelegt ist und weiterhin, daß entweder der Strom oder die Spannung auch bei den nicht eigensicheren Anschlüssen stark begrenzt ist.

Aus der DE 27 52 783 B1 ist des weiteren eine Steckverbindung für medizinische Geräte, z.B. für die Übertragung von EKG-Signalen zu einer Auswerteeinheit bekannt. Bei dieser Steckverbindung erfolgt die Übertragung der Energie von dem Gerät mit einem entsprechenden Energieversorgungsteil über einen induktiven Übertrager auf das Sekundärteil. Die Datenübertragung erfolgt bei diesem Gerät über eine optoelektronische Leitung, z.B. vom EKG-Gerät über das Sekundärteil in Richtung zum Primärteil.
Dieses Gerät weist jedoch weder Begrenzereinrichtungen, insbesondere für die Energieübertragung auf, noch ist eine bidirektionale Datenübertragung vorgesehen. Das Gerät eignet sich daher nicht für den Ex-Bereich.

Aus der Druckschrift "der elektromeister + deutsches elektrohandwerk 1985, Heft 6 (Seiten 349 bis 352)" sind zwar Erfordernisse für Anlagen des Ex-Bereiches entnehmbar. Die dort vorgesehenen Barrieren stellen jedoch ausschließlich festverdrahtete Strom-Spannungsbarrieren dar, die zudem für eine Datenübertragung nur bedingt einsetzbar sind. Es ist hieraus auch kein Hinweis entnehmbar, wie eine steckbare Daten- und Energieübertragungsvorrichtung für den Ex-Bereich ausgelegt sein sollte.

Die DE 36 44 868 A1 betrifft eine Verbindung für einen Teilnehmer an einem lokalen Netzwerk. Diese Druckschrift offenbart jedoch nur eine Zweidrahtleitung, über die Energie und Daten übertragen werden, so daß hierdurch bereits eine starke Begrenzung bei der Übertragung von Energie und Daten vorliegt. Zum anderen ist die entsprechende Verbindung nicht steckbar auslegt, so daß auch eine wünschenswerte Flexibilität für eine einfache Anpassung für den Leistungsbedarf verschiedener Sensoren bzw. Aktoren, nicht gegeben ist.

Der Erfindung liegt daher die **Aufgabe** zugrunde, die vorausgehenden Nachteile zu überwinden und eine Steckverbindung zur Energie- und Datenübertragung für Verbraucher wie Sensoren und Aktoren im explosionsgefährdeten Bereich zu schaffen, wobei eine hohe Leistungsfähigkeit und Flexibilität durch diese Steckverbindung gegeben sein soll. Weiterhin soll ein Energie- und Datenübertragungsverfahren für explosionsgefährdete Bereiche geschaffen werden, mit dem eine hohe Zuverlässigkeit erreicht wird.

Diese Aufgabe wird erfindungsgemäß bei einer Steckverbindung gemäß Oberbegriff des Anspruches 1 durch die Merkmale des kennzeichnenden Teils gelöst. Bei einem Energie- und Datenübertragungsverfahren für explosionsgefährdete Bereiche wird dies durch die Merkmale des Anspruches 18 gelöst.

Ein wesentlicher Gedanke der Erfindung kann darin gesehen werden, Energie und Daten mit separaten Zuführleitungen vom Bussystem der Steckverbindung zuzuführen und erst in der Steckverbindung selbst, mindestens im Primärteil, Begrenzereinrichtungen für die entsprechenden elektrischen Grössen vorzusehen.
Mindestens der Sekundärteil wird dabei im Ex-Bereich angeordnet.
Durch die Auslegung der erfinderischen Steckverbindung besteht aber auch die Möglichkeit, die Steckverbindung insgesamt oder sogar die Steckverbindung und das Bussystem im Ex-Bereich vorzusehen.
Bei dieser Konzeption ist einerseits eine hohe Datenübertragungsrate möglich, andererseits gestattet die Auslegung sehr flexibel Verbraucher über die Steckverbindung im Ex-Bereich anzuschließen, die unterschiedliche Leistungen fordern.

Wahlweise kann daher auch der Anschluß von Verbrauchern, welche in der Zündschutzart "erhöhte Sicherheit" oder in anderen Zündschutzarten ausgeführt sind und eine dementsprechend höhere Leistungsaufnahme aufweisen, realisiert werden. Auch "einfache Betriebsmittel" können angeschlossen werden.

Indem im Primärteil einer Steckverbindung Begrenzereinrichtungen vorgesehen sind, welche zur Begrenzung der an ein Sekundärteil zu übertragenden elektrischen Größen auf für die Zündschutzart "erhöhte Sicherheit e" oder die Zündschutzart Eigensicherheit i" oder andere Zündschutzarten (z.B. "m", "d", "p", "q", "s", "o") zulässige Werte ausgelegt ist, ist es möglich, Sensoren und Aktoren im explosionsgefährdeten Bereich zu stecken. Die Begrenzereinrichtung begrenzt zu diesem Zweck die zu übertragenden elektrischen Größen individuell auf die jeweils zulässigen Werte. Dadurch ist gleichzeitig auch eine sehr hohe Leistungsfähigkeit und Flexibilität der Steckverbindung sichergestellt. Die Steckverbindung kann in einem Bussystem in eigensicheren und nichteigensicheren Stromkreisen betrieben werden und dabei Verbraucher verschiedener Zündschutzarten versorgen. Durch die hohe Leistungsfähigkeit und Flexibilität der erfindungsgemäßen Steckverbindung ist es möglich, ein äußerst vorteilhaftes Übertragungssystem für explosionsgefährdete Bereiche aufzubauen.

Da weiterhin mindestens das Primärteil eine Wandlereinrichtung mindestens für die Daten aufweist, wird eine Möglichkeit zur Leistungssteigerung bei einer erfindungsgemäßen Steckverbindung geschaffen. Die elektrischen Größen können nämlich bis zur Steckverbindung in einer Übertragungsform übertragen werden, welche für die Übertragungseigenschaften des Bussystems optimiert sind. Erst im Primärteil der Steckverbindung findet eine Umformung in Signalformen statt, die für die Übertragungsart der Steckverbindung optimiert sind. Bei diesen Signalformen kann es sich auch um getaktete Signale oder modulierte Signale handeln.

Gemäß einer vorteilhaften Ausführungsform ist die Wandlereinrichtung ein Modulator-Demodulator, welcher die ankommenden digitalen Impulse in zur Übertragung optimierte Signalformen umwandelt. Dabei kann es sich beispielsweise um FSK oder andere frequenzmodulierte oder auch amplitudenmodulierte und andere Modulationsarten handeln. Da auch im Sekundärteil ein Modulator-Demodulator angeordnet ist, kann dort eine Rücktransformation der Signalform stattfinden.
Die Steckverbindung ist in diesem Fall ebenfalls für eine Datenübertragung in umgekehrter Reihenfolge geeignet.

Zur Verbesserung der Übertragungseigenschaften ist es weiterhin vorteilhaft, wenn das Primärteil und optional auch das Sekundärteil jeweils einen Transceiver aufweisen. Die Transceiver sind erforderlich um z.B. differentielle Signale von den Zuleitungen in Logikpegel umzuwandeln. Durch den in der Steckverbindung angeordneten Transceiver werden die zu übertragenden Signalformen direkt an dem für die Übertragung kritischen Übergang vom Primärteil zum Sekundärteil gebildet. Durch diese Maßnahme wird insbesondere der Datenverlust sehr gering.

Weiterhin ist es vorteilhaft, wenn das Primärteil einen Mikroprozessor und einen adressierbaren Speicher, insbesondere ein EEPROM, aufweist. Durch diese Maßnahme ist eine Adressierung des Primärteils möglich. Lediglich an die betreffende Steckverbindung adressierte Daten werden zum Sekundärteil übertragen. Auch die Energieübertragung kann somit selektiv gesteuert werden.

In besonders vorzuziehender Ausgestaltungsform der Steckverbindung weist das Primärteil eine Einrichtung zur Lastüberwachung des am Sekundärteil angeschlossenen Verbrauchers auf, welche die dem Sekundärteil zugeführten elektrischen Größen in Abhängigkeit von der Zündschutzart des angeschlossenen Verbrauchers begrenzt.

Dadurch ist ein sehr hoher Automatisierungsgrad der erfindungsgemäßen Steckverbindung gegeben. Es müssen keine gesonderten Informationen durch das Bussystem zur Steckverbindung übertragen werden, aus welchen die Maximalwerte der zu übertragenden elektrischen Größen hervorgehen. Es werden lediglich Informationen von der Sekundärseite benötigt, die dann zu einer automatischen Anpassung führen. Dabei kann es sich um Selbstidentifizierungsdaten des Verbrauchers und/ oder des Sekundärteils handeln. Die Einrichtung zur Lastüberwachung setzt die erhaltenen Informationen in Anweisungen an die Begrenzereinrichtung um.

Eine besonders sichere Ausgestaltung der Einrichtung zur Lastüberwachung aktiviert die Energieübertragung vom Primärteil nur dann, wenn ein Signal vom Sekundärteil empfangen wird, welches sicherstellt, daß der angeschlossene Verbraucher ordnungsgemäß arbeitet. Bei einem solchen Signal kann es sich um ein Wechselsignal handeln, dessen Frequenz und Phase überprüft wird, oder um ein Digitalsignal mit codierter und überprüfbarer Information. Insbesondere wird die Energieübertragung abgeschaltet, wenn kein Sekundärteil angeschlossen ist.

Vorteilhaft ist es ebenfalls, im Sekundärteil einen nicht flüchtigen Speicher, z. B. ein EEPROM in Verbindung mit einem Mikroprozessor vorzusehen, in welchem eine Adresse und/ oder weitere Kenndaten der Steckverbindung und/oder des angeschlossenen Verbrauchers abgespeichert sind. Dadurch ist insbesondere eine sehr effektive Möglichkeit geschaffen, der Einrichtung zur Lastüberwachung des Primärteils Selbstidentifizierungsdaten des Sekundärteils oder des angeschlossenen Verbrauchers zu übermitteln.

Eine Maßnahme zur Energieeinsparung besteht darin, im Sekundärteil einen Mikroprozessor anzuordnen, welcher beim Empfang von an die Steckverbindung adressierten Daten vom Bussystem die elektronischen Bauteile des Sekundärteils aktiviert. Ansonsten sind diese Bauteile abgeschaltet und verbrauchen keinen Strom.

Sehr vorteilhaft ist es, die Übertrager für die elektrischen Größen zwischen Primärteil und Sekundärteil induktiv auszulegen. Dadurch wird gleichzeitig die vorteilhafte galvanische Trennung zwischen Bussystem und Verbraucher erreicht.

In dieser Anmeldung wird unter galvanischer Trennung im Sinne einer sicheren galvanischen Trennung eine "sichere Trennung" entsprechend den Normen DIN VDE 0106 Teil 101, IEC79-3 und EN50020 verstanden.

Die induktive Übertragung wird besonders gut durch primär und sekundärseitige Spulen durchgeführt, welche gemäß den Ansprüchen 13 und 15 angeordnet sind. Ferritkerne sorgen für eine Erhöhung des Übertragungswirkungsgrades.

Um die Möglichkeit auszuschließen, durch Heranführen von ringförmigen, leitfähigen Gegenständen, die auch "Empfangsgebilde" genannt werden, Ströme und eventuell Funken in diesen zu induzieren, sind im Primärteil und im Sekundärteil Materialien mit niedriger Permeabilität, beispielsweise ein Kunststoff, angeordnet. Diese gewährleisten auch einen Mindestabstand zum Empfangsgebilde, so daß die Streufeldstärke auf Werte abgeschwächt wird, welche nicht mehr für die Generierung eines Funkens ausreichen.

Gute Ergebnisse werden erzielt, wenn ein der Zündschutzart "d" angepaßter Luftspalt ausgebildet ist und eine Sicherungseinrichtung zur Überwachung des Luftspaltes vorgesehen ist. Die Sicherungseinrichtung detektiert ein Auseinanderziehen des Luftspaltes und weist in diesem Fall die Begrenzereinrichtung unverzüglich an, die Maximalwerte der zu übertragenden elektrischen Größen entsprechend den dadurch veränderten Anschlußbedingungen des Primärteils herunterzuregeln. Es kann auch eine mechanische Sicherungseinrichtung vorgesehen sein, welche beim Auseinanderziehen des Luftspaltes durch Entfernung der primär und sekundärseitigen Übertragungskomponenten voneinander den Übertragungswirkungsgrad senkt.

Der Luftspalt erstreckt sich vorteilhafterweise von einem Zwischenraum zwischen den Ferritkernen bis zu einer Gewindeverbindung oder einem anderen Verriegelungsmechanismus, beispielsweise einem Bajonett, zwischen einer Überwurfmutter und dem primärseitigen Steckergehäuse, sowie einem Zwischenraum zwischen der Überwurfmutter und einem sekundärseitigen Steckergehäuse. Dabei kann die Sicherungseinrichtung zur Überwachung des Luftspaltes so ausgeführt werden, daß ein Öffnen des Verriegelungsmechanismus detektiert wird. Durch eine mechanische Sicherung kann das Öffnen des Verriegelungsmechanismus mit einem Entfernen der Spulen voneinander gekoppelt werden.

Für das primärseitige Gehäuse der Steckverbindung sind die Ausführungen "druckfeste Kapselung d", "Vergußkapselung m", andere Zündschutzarten oder eine Kombination davon geeignet.

Die Datenübertragung kann sehr effizient auch durch eine optische Einrichtung durchgeführt werden.

Prinzipiell ist auch eine mit elektrischen Kontakten versehene Einrichtung zur Übertragung der elektrischen Größen zwischen Primärteil und Sekundärteil möglich.

Ein vorteilhafter Einsatz der erfindungsgemäßen Steckverbindung findet, wie oben bereits beschrieben, mit einem Bussystem statt, welches in einer anderen Zündschutzart als "Eigensicherheit" oder in keiner Zündsschutzart ausgeführt ist. Auf diese Weise wird die volle Leistungsfähigkeit und Flexibilität der Steckverbindung voll ausgenutzt.
Der Einsatz ist aber auch nicht darauf beschränkt. Das Bussystem könnte auch in der Zündschutzart Eigensicherheit (i) ausgeführt sein.

Die Businstallation kann beispielsweise in der Zündschutzart "erhöhte Sicherheit e" ausgeführt sein. Beispielsweise kann die Businstallation für 24 V und 4 A ausgelegt sein.

Das Bussystem kann als Dreileiter- oder Mehrleitersystem ausgeführt sein. Zur Steigerung der Informationsdichte kann das Bussystem z.B. mit mindestens vier Leitungen und einer Abschirmung ausgestattet sein. Mindestens zwei Leitungen dienen der Energieübertragung und mindestens zwei weitere der Informationsübertragung. Die für die Informationsübertragung vorgesehenen Leitungen können dabei ununterbrochen Daten übertragen und es findet keine unerwünschte Vermischung mit den zur Energieübertragung notwendigen Signalformen statt. Es ergibt sich eine höhere Störsicherheit und einfachere Schaltungstechnik.

Eine geeignete Bustopologie ist die Knotenpunktanordnung, wobei die Knotenpunkte Klemmen mit der Zündschutzart "erhöhte Sicherheit" oder starre Verbindungen, z.B. Lötstellen entsprechend der Zündschutzart "erhöhte Sicherheit", sind. Mit diesen Maßnahmen kann die Zündschutzart "e" besonders einfach eingehalten werden. Die Busleitung selbst kann Stich-, Baum- oder Ringstruktur haben.

Bei einem Energie- und Datenübertragungsverfahren für explosionsgeschützte Bereiche wird erfindungsgemäß in einem Primärteil einer Steckverbindung die Zündschutzart eines angeschlossenen Verbrauchers erfaßt oder vorgegeben und die zu übertragenden elektrischen Größen werden gemäß der erfaßten oder vorgebenen Zündschutzart begrenzt. Dieses Verfahren ermöglicht in besonders vorteilhafter Weise die Versorgung von Verbrauchern verschiedener Zündschutzarten. Insbesondere können Sensoren und Aktoren im explosionsgefährdeten Bereich gesteckt werden. Dazu werden die Maximalwerte der zu übertragenden elektrischen Größen entsprechend den jeweils zulässigen Werten angepaßt.

Insbesondere ist gewährleistet, daß die Maximalwerte bei abgezogenem Sekundärteil auf für die Zündschutzart "Eigensicherheit" zulässige Werte begrenzt werden. Es kann dann beispielsweise auf eine geringe Leistung von z. B. 2 W heruntergefahren werden, die gerade noch ausreicht, die Anschlußbedingungen sicher festzustellen. Bei abgezogenem Sekundärteil darf das elektromagnetische Feld des Primärteils hinsichtlich explosionsfähiger Gemische nicht zündfähig sein.

Zweckmäßigerweise werden die Ausgangswerte am Primärteil im ungesteckten Zustand auf Werte < 1,2 V, < 0,1 A, < 20 µJ oder < 25 mW begrenzt. Diese Werte werden bei Verbrauchern mit der Definition "einfache Betriebsmittel" nicht überschritten (DIN EN 50 014 / VDE 0170/0171 Teil 1/05/78 Abschnitt 1.3).

Das Energie- und Datenübertragungsverfahren wird vorteilhafterweise mit einer erfindungsgemäßen Steckverbindung durchgeführt.

Die Erfindung wird nachfolgend anhand einiger schematischer Beispiele unter Bezugnahme auf die Zeichnung noch näher erläutert. Es zeigen:
- Fig. 1: einen Querschnitt einer erfindungsgemäßen Steckverbindung,
- Fig. 2: einen Querschnitt einer alternativen Ausführungsform einer erfindungsgemäßen Steckverbindung,
- Fig. 3: ein schematisches Blockschaltbild eines erfindungsgemäßen Energie- und Datenübertragungssystems,
- Fig. 4: die Elektronik eines intelligenten Sensors, und
- Fig. 5: einen Schnitt einer erfindungsgemäßen Steckverbindung analog zu Fig. 1, jedoch mit einer optischen Einrichtung zur Datenübertragung.

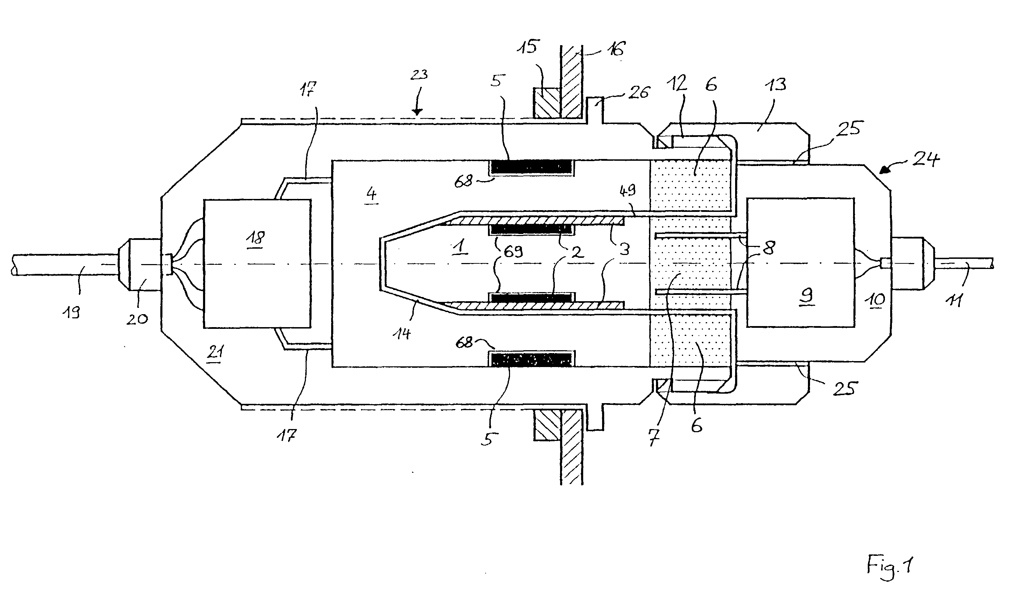

Der in Fig. 1 gezeigte Querschnitt einer erfindungsgemäBen Steckverbindung weist ein Primärteil 23 und ein Sekundärteil 24 auf. Das Primärteil 23 ist in der Zündschutzart "m", "d" oder einer anderen Zündschutzart oder einer Kombination "m", "e(i)" ausgeführt. Das Sekundärteil 24 kann in der Zündschutzart "Eigensicherheit i" ausgeführt sein. Energie und Daten werden über ein Buskabel 19 durch eine gegebenenfalls druckfeste Verschraubung 20 in ein primärseitiges Steckergehäuse 21 geführt, welches in einer der Zündschutzarten m, d, p oder q oder anderen Zündschutzarten ausgeführt ist. Die vier Busleitungen werden dem primärseitigen Elektronikmodul 18 zugeführt, welches weiter unten noch detailliert beschrieben wird. Die im Elektronikmodul 18 elektronisch verarbeiteten und induktiv übertragbaren elektrischen Signale werden über primärseitige Anschlußverbindungen 17 zu einer primärseitigen Spule 5 übertragen. Die Spule 5 befindet sich in einem primärseitigen Ferritkern 4, welcher in seinen Materialeigenschaften entsprechend der zu übertragenden Frequenzen so gewählt ist, daß ein guter Übertragungswirkungsgrad der induktiven Übertragung ermöglicht ist. Eine sekundärseitige Spule 2 ist auf einem dornartig ausgebildeten Ferritkern 1 des Sekundärteils 24 etwa auf halber Höhe des Dorns aufgewickelt. In vollständig zusammengestecktem Zustand der Steckverbindung sind die primär- und sekundärseitige Spule 5, 2 koaxial im gleichen axialen Abschnitt angeordnet. Die sekundärseitige Spule 2 ist von einer Isolierung 3 umgeben, welche als Schutz für die Wicklungen dient. Die primär- und sekundärseitige Spule 5, 2 sind jeweils über eine Isolierung 68, 69 gegen die sie umgebenden Ferritkerne 4, 1 isoliert.

Die auf die sekundärseitige Spule 2 induktiv übertragenen elektrischen Signale werden über sekundärseitige Anschlußdrähte 8 zu einem sekundärseitigen Elektronikmodul 9 in einem Sekundärteilgehäuse 10 übertragen. Die verarbeiteten elektrischen Signale gelangen dann über ein sekundärseitiges Anschlußkabel 11 zu einem Betriebsmittel, Gerät bzw. Verbraucher, z. B. einem Widerstandsfühler.

Rückmeldungssignale von dem Betriebsmittel bzw. Verbraucher durchlaufen die Steckverbindung in umgekehrter Reihenfolge.

Auf der Stirnseite des Primärteils 23 ist ein ringförmiger Aufsatz 6 aus einem magnetisch schlecht leitendem Material, z.B. einem Kunststoff, der als kombinierte Zentriereinrichtung und Abstandsteil wirkt, angebracht. Der Sockelabschnitt 7 des dornartigen Ferritkerns 1 des Sekundärteils 24 ist ebenfalls aus einem magnetisch schlecht leitendem Material, z.B. einem Kunststoff hergestellt. Diese Kunststoffabschnitte haben neben der Zentrierung des Primär- und Sekundärteils 23, 24 und dem mechanischen Schutz die Wirkung, eine mögliche Energieübertragung von oder zu der Spule 5 durch Induktion in einem herangeführten Empfangsgebilde zu minimieren, da sie als magnetischer Isolator wirken. Über die Abschirmung 6 ist eine Überwurfmutter 13 zur Fixierung des Sekundärteils 24 gelegt. Die Überwurfmutter 13 und der Aufsatz 6 sind durch Gewinde 12 an den Verbindungsflächen miteinander verschraubt. Ein Bajonettverschluß ist alternativ auch möglich. Ein für eine Zündschutzart notwendiger definierter Luftspalt 49 verläuft vom Zwischenraum 14 zwischen dem sekundärseitigen Ferritkern 1 und dem primärseitigen Ferritkern 4 entlang dem Zwischenraum zwischen dem Aufsatz 6 und dem Sockelabschnitt 7 sowie dem sekundärseitigen Gehäuse 10 über die Gewinde 12 oder den Zwischenraum 25 zwischen dem sekundärseitigen Gehäuse 10 und der Überwurfmutter 13 nach außen. Das Primärteil 23 und der Sekundärteil 24 sind sicher galvanisch voneinander getrennt. Das primärseitige Gehäuse 21 ist mittels Vorsprüngen 26 und einem Gewindering 15 an einer Gehäusewand 16 fixiert.

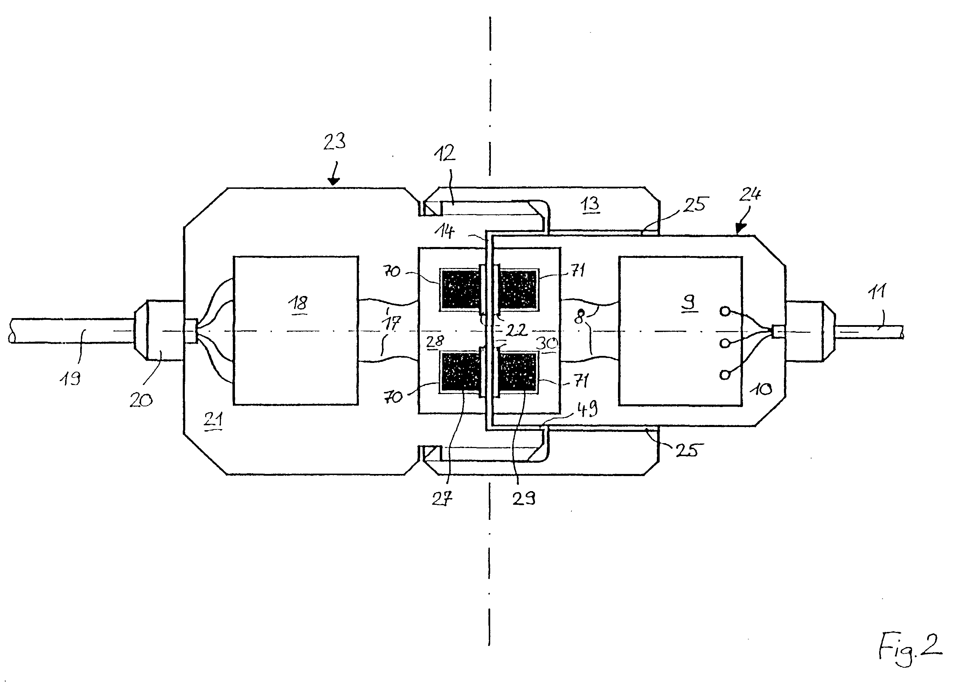

Die in Fig. 2 dargestellte Steckverbindung ist überwiegend gleichartig aufgebaut wie die Steckverbindung aus Fig. 1. Die übereinstimmenden Bauteile sind mit den gleichen Bezugsziffern wie in Fig. 1 versehen und werden nicht nochmals beschrieben. Abweichend ist jedoch die Ausgestaltung der primärseitigen Spule 27 und des zugehörigen primärseitigen Ferritkerns 28, sowie der sekundärseitigen Spule 29 mit dem zugehörigen sekundärseitigen Ferritkern 30. Die Anordnungen aus Spule und Ferritkern sind primär- und sekundärseitig gleich ausgeführt. Die Ferritkerne 28, 30 sind topfförmig mit einander zugekehrten Topfinnenseiten ausgeführt. Sie weisen jeweils einen Topfkern auf, d. h. in Topfmitte ragt ein zylinderförmiger Zapfen bis auf die gleiche Höhe wie die Topfwände auf. Um diesen zylinderförmigen Zapfen ist jeweils die Spule 27, 29 gewickelt. Die Spulen 27, 29 füllen im wesentlichen den gesamten Innenraum der Ferritkerne 28, 30 aus. Bei vollständig zusammengesteckter Steckverbindung sind die primärseitige Spule 27 und die sekundärseitige Spule 29 koaxial und direkt benachbart angeordnet. Die Spulen 27, 29 sind jeweils mit einer Isolierung 22 abgedeckt und auch jeweils mit einer Isolierung 70, 71 gegen die sie umgebenden Ferritkerne 28, 30 isoliert.

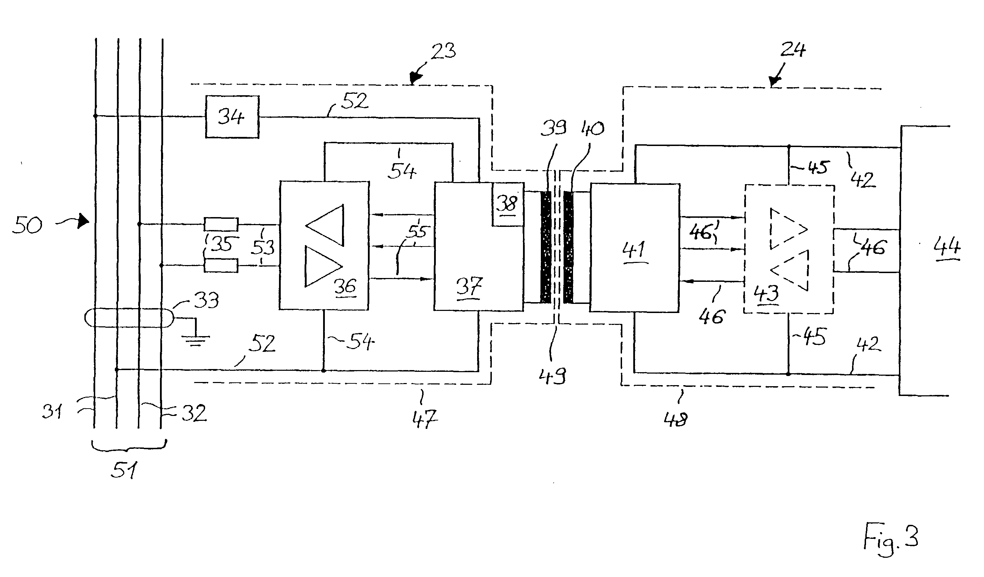

Fig. 3 zeigt links einen Ausschnitt einer Busleitung 51 mit zwei Energieleitungen 31, zwei Datenleitungen 32 und einer Abschirmung 33. Energie und Daten werden von nicht dargestellten Energie- und Datenquellen erzeugt und in die Busleitung 51 eingespeist. Die elektrischen Werte auf den Energieleitungen 31 können z.B. 24 V und 4 A betragen. Das gesamte Bussystem ist in einer Knotenpunktanordnung ausgeführt. An einem Knotenpunkt 50 werden die Energieleitungen 31 und die Datenleitungen 32 der Busleitung 51 an Abzweigungsleitungen 52 für die Energieleitungen 31 und Abzweigungsleitungen 53 für die Datenleitungen 32 angeschlossen. Der Knotenpunkt ist als Klemme in der Zündschutzart "erhöhte Sicherheit" oder als starre Verbindung, beispielsweise als Lötstelle entsprechend der Zündschutzart "erhöhte Sicherheit", ausgeführt.

Die unterbrochene Linie 47 zeigt schematisch das Gehäuse eines Stecker-Primärteils 23. Die unterbrochene Linie 48 zeigt schematisch das Gehäuse eines Stecker-Sekundärteils 24.

In die obere Abzweigungsleitung 52 ist eine Begrenzereinrichtung 34 für die elektrische Leistung eingefügt, durch welche die von den Energieleitungen 31 der Busleitung 51 aufgenommene elektrische Leistung wahlweise auf maximal zulässige elektrische Leistungen gemäß der Zündschutzart eines an dem Knotenpunkt 50 angeschlossenen Verbrauchers 44 begrenzt werden kann. Die Begrenzereinrichtung 34 dient daher der Einhaltung der Zündschutzart des Primärteils (z.B. "m", "d') sowie des Sekundärteils, da die übertragene Energie stets kleiner als die zugeführte Energie ist.
In beide Abzweigungsleitungen 53 der Datenleitungen 32 ist eine Begrenzereinrichtung 35 eingefügt, welche ebenfalls Begrenzungsaufgaben erfüllt und der Sicherstellung der Einhaltung der primärseitigen Zündschutzart (z.B."m", "d") und bei kontaktbehafteter Übertragungstechnik auch der sekundären Zündschutzart dient.

Die Abzweigungsleitungen 53 der Datenleitungen 32 werden einem Transceiver 36 zugeführt. Die physikalische Schnittstelle ist z.B. RS485. In den Transceiver 36 gelangen außerdem noch Energieversorgungsleitungen 54 und Anschlußleitungen 55 für Daten, welche an ein Elektronikmodul 37 mit einem Modulator-Demodulator angeschlossen sind. In dieser Einheit findet eine Umwandlung der von der Busleitung 51 empfangenen elektrischen Größen in solche elektrischen Größen statt, welche zur Übertragung in einem zugehörigen Steckverbindungssystem geeignet sind. Dabei handelt es sich in diesem Fall um ein induktiv arbeitendes Steckverbindungssystem, beispielsweise gemäß der Ausführungsform aus den Fig. 1 und 2. Die vom Modulator-Demodulator des Moduls 37 umgewandelten elektrischen Größen werden einer primärseitigen Spule 39 zugeführt und von dieser in eine sekundärseitige Spule 40 induktiv übertragen. An die sekundärseitige Spule 40 ist ein sekundärseitiges Elektronikmodul 41 mit einem Modulator-Demodulator angeschlossen, welcher eine Umformung der zur induktiven Übertragung geeigneten elektrischen Signalform in eine zur weiteren Verarbeitung geeignete Form zum Verbraucher 44 umformt. Der sekundärseitige Modulator-Demodulator 41 ist über Anschlußleitungen 46 entweder über einen optional vorgesehenen sekundärseitigen Transceiver 43 oder direkt mit dem Verbraucher 44 verbunden. Über Versorgungsspannungsleitungen 42 wird dem Verbraucher 44 die zu dessen Betrieb notwendige Energie vom sekundärseitigen Modulator-Demodulator 41 übertragen. Der optional vorgesehene sekundärseitige Transceiver 43 ist ebenfalls über Energieabzweigungsleitungen 45 an die Versorgungsspannungsleitung 42 angeschlossen.

Vom Verbraucher 44 herrührende Rückmeldungsdaten durchlaufen die dargestellte Anordnung in umgekehrter Reihenfolge. Das gesamte Primärteil 23 ist z.B. in der Zündschutzart "m", "d", "q", "p" oder einer anderen Zündschutzart oder einer Kombination davon ausgeführt. Das gesamte Sekundärteil 24 ist z. B. in der Zündschutzart "i" oder einer anderen Zündschutzart ausgeführt.

Optional kann auch ein Verbraucher 44 versorgt werden, welcher z.B. in der Zündschutzart "e", "m", "d", "q", "p" oder einer Kombination davon ausgeführt ist.
Auch können einfache Betriebsmittel angeschlossen werden. Zu diesem Zweck ist dem primärseitigen Elektronikmodul 37 eine Überwachungsschaltung 38 zugeordnet, welche die Zündschutzart des angeschlossenen Verbrauchers 44 überwacht und die von der primärseitigen Spule 39 übertragbaren Werte der elektrischen Größen anpaßt. Bei abgezogenem Sekundärteil 24 wird auf Werte für die Zündschutzart "Eigensicherheit" geregelt. Dabei kann es sich um eine Leistung von z.B. 2 W handeln, die zur Aufrechterhaltung der Überwachung notwendig ist. Die Überwachungsschaltung 38 erhält über induktive Einkopplung durch die beiden Spulen 39, 40 Selbstidentifizierungsdaten von der Sekundärseite, d. h. beispielsweise von dem Verbraucher 44 oder einem dem Stecker-Sekundärteil 24 zugeordneten Bauteil. Nur wenn die Überwachungsschaltung 38 aus den Selbstidentifizierungsdaten der Sekundärseite sicher erfaßt hat, daß die gesamte Anordnung, welche an das Stecker-Primärteil 23 angeschlossen ist, einer anderen Zündschutzart als Eigensicherheit unterliegt, wird von der Überwachungsschaltung 38 ein Signal an die Leistungsbegrenzungen 34 und 35 übermittelt, worauf diese die von der Busleitung 51 eintreffende elektrische Leistung auf einen Maximalwert gemäß der Zündschutzart des angeschlossenen Betriebsmittels begrenzen. Wenn Selbstidentifizierungsdaten von der Sekundärseite nicht eindeutig erfaßt wurden, weist die Überwachungsschaltung 38 die Leistungsbegrenzungen 34 und 35 an, die Leistung auf für die Zündschutzart "Eigensicherheit" zulässige Werte zu begrenzen. Diese Anordnung ist mehrfach "fail-safe" ausgeführt, was im einzelnen aus der Fig. nicht hervorgeht.

Eine besondere Aufgabe erfüllt die Überwachungsschaltung 38 bezüglich eines Luftspaltes 49 zwischen den beiden Spulen 39 und 40. Dieser Luftspalt 49 ist z.B. zur Einhaltung der Anforderungen an die Zündschutzart notwendig und darf nicht vergrößert werden, indem beispielsweise die beiden Stekkerhälften auseinandergezogen werden. Daher erfaßt die Überwachungsschaltung 38 eine Vergrößerung des Luftspaltes 49 und stellt in einem solchen Fall augenblicklich sicher, daß die von der primärseitigen Spule 39 übertragbare elektrische Leistung auf für die Zündschutzart "Eigensicherheit" zulässige Werte begrenzt ist.

Bezug nehmend auf die Fig. 1 und 2 wird dies dadurch erreicht, daß ein Lösen der Überwurfmutter 13, welches zu einem Auseinanderziehen von Primärteil 23 und Sekundärteil 24 und damit zu einer Vergrößerung des Luftspaltes 49 führen könnte, sicher detektiert wird und zu den oben angegebenen Maßnahmen führt. Es kann auch eine mechanische Sicherung vorgesehen sein, durch die ein Aufschrauben der Gewinde 12 immer mit der Entfernung der primär- und sekundärseitigen Spule 5, 27, 2, 29 voneinander verbunden ist. Dadurch wird der Übertragungswirkungsgrad verschlechtert.

Wie oben dargestellt wurde, findet die Umwandlung der Übertragungsart von der Zündschutzart "e" zur Zündschutzart Eigensicherheit "i" im Stecker-Primärteil 23 statt.

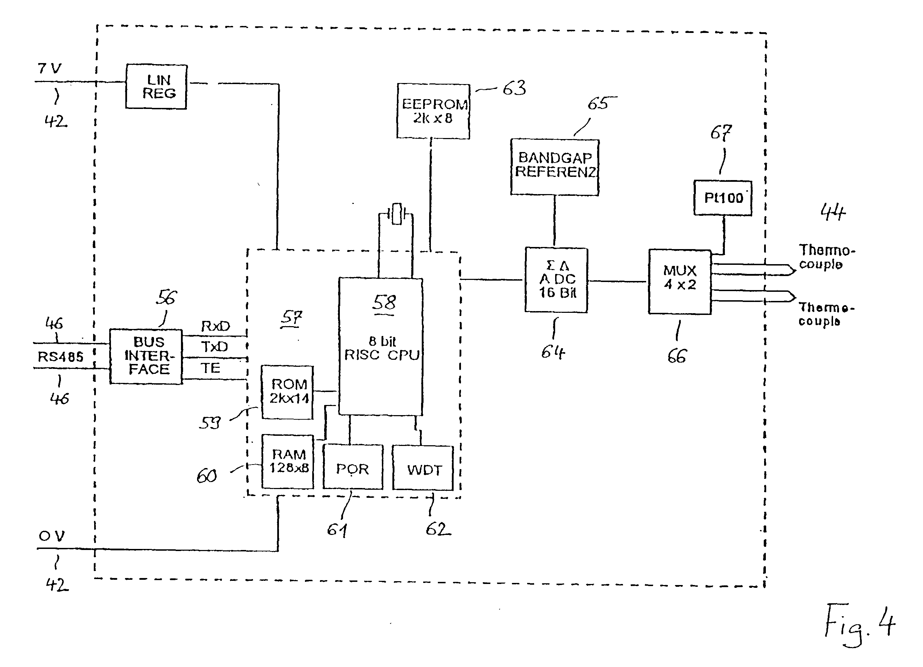

Fig. 4 zeigt die Elektronik eines intelligenten Sensors. Aus Gründen der Übersichtlichkeit werden Energieversorgungsleitungen der einzelnen Komponenten in Fig. 4 nicht dargestellt. Die Bezugsziffern für bereits in vorhergehenden Figuren dargestellte Bauteile stimmen mit den Bezugsziffern aus diesen Figuren überein. Auf eine nochmalige Beschreibung dieser Bauteile wird verzichtet.

Die Daten werden über einen Transceiver 56 einem Elektronikmodul 57 zugeführt. Das Elektronikmodul 57 weist einen Mikroprozessor 58 und zugehörige Peripheriebausteine auf. Dabei handelt es sich im einzelnen um ein ROM 59, ein RAM 60, ein Power on reset (POR)-Modul 61 und einen Watch Dog Timer (WDT) 62. Dem Elektronikmodul 57 ist weiterhin ein EEPROM 63 zugeordnet. Alle diese Bauteile sind im Sekundärteil 24 der Steckverbindung angeordnet. In das EEPROM 63 wird die Adresse des zugehörigen Sensors eingespeichert und angesteuert durch den Mikroprozessor 58 wird die Sensorelektronik vorzugsweise erst dann aktiviert, wenn auf den Signalleitungen 32 an den zugehörigen Stecker adressierte Daten eingegeben werden. Ansonsten schaltet der Mikroprozessor 58 die Elektronik bei Bedarf vorteilhafterweise ab.

Die von dem Elektronikmodul 57 abgegebenen Signale werden über weitere Signalverarbeitungs-Bauteile dem Verbraucher 44 zugeführt. Dabei handelt es sich um einen Analog-Digitalwandler 64, eine Bandgapreferenz 65, einen Multiplexer 66 und einen angeschlossenen Pt100 67. Die Funktionsweise dieser Bauteile wird im einzelnen hier nicht beschrieben. Die Bauteile dienen prinzipiell dazu, genaue Daten von dem Sensor 44, welcher in diesem Fall ein Thermoelement ist, zu erhalten.

Das Elektronikmodul 57 und das EEPROM 63 können alternativ auch im Primärteil 23 der Steckverbindung untergebracht sein. In diesem Fall wird in das EEPROM 63 die Adresse des Knotenpunktes eingespeichert.

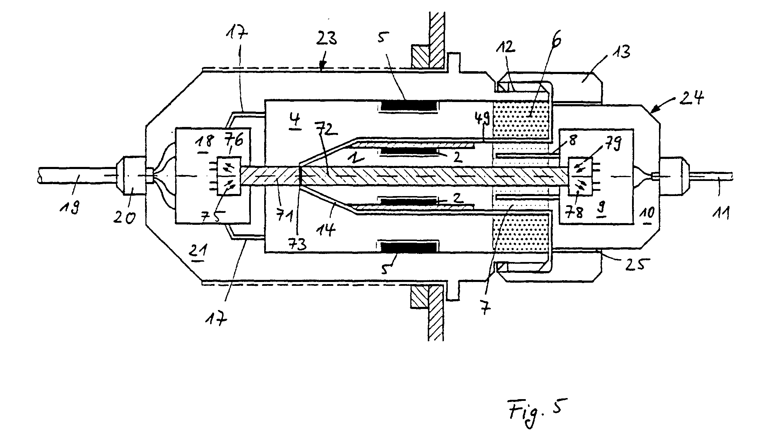

Fig. 5 zeigt ein weiteres Ausführungsbeispiel einer erfindungsgemäßen Steckverbindung mit einem Schnitt in Längsrichtung analog der Steckverbindung nach Fig. 1. Es sind daher übereinstimmende Bezugszeichen für die jeweiligen Baugruppen gewählt.

Im Beispiel nach Fig. 5 ist jedoch das Primärteil 23 und das Sekundärteil 24 für die Datenübertragung auf optischem Wege ausgelegt.
Hierzu ist im Primärteil 23 im wesentlichen koaxial zur Längsachse ein Lichtleitstab 71 vorgesehen, der im Elektronikmodul 18 mit einem Sender 75 und einem Empfänger 76 gekoppelt ist.

Im Sekundärteil 24 ist ebenfalls in der Längsachse ein entsprechender Lichtleitstab 72 vorhanden, der im entsprechenden Elektronikmodul 9 des Sekundärteiles einen Empfänger 78 und einen Sender 79 aufweist.
Die entsprechenden Lichtleitstäbe 71 bzw. 72 können als Glasfasern zur optischen Datenübertragung ausgelegt sein, wobei der Querschnitt der Glasfaser etwa kreiszylindrisch ist.

Die Stirnseiten der Lichtleitstäbe 71 und 72 stehen im wesentlichen im Zentrum des konisch zulaufenden Teiles des Sekundärteiles planar so gegenüber, daß optische Verluste weitestgehend ausgeschlossen sind.

Die auf das Primärteil 23 gegebenen Daten werden daher vom Sender 75 in optische Signale umgewandelt und über den Lichtleitstab 71 auf den Lichtleitstab 72 übertragen, vom letzteren erfolgt dann die Einspeisung in den Empfänger 78, der die optischen Daten in elektrische Signale umwandelt.

Der Datenübertragungsweg vom Sekundärteil 24 erfolgt über den Sender 79 zum Empfänger 76 des Primärteils, in dem die Umwandlung der optischen Signale in elektrische Signale erfolgt.
Die Entkopplung der Übertragung von Energie und Daten hat den Vorteil, daß Störeffekte reduziert werden und die Übertragungsrate von Daten unabhängig vom Energietransfer ausgelegt werden kann.

## Patentansprüche

1. Steckverbindung für einen explosionsgefährdeten Bereich zur Energie- und Datenübertragung zwischen mindestens einem elektrischen Verbraucher (44) und einem Bussystem (50),
mit einem als Übertrager ausgebildeten Primär- (23) und Sekundärteil (24),
wobei das Primär- (23) und Sekundärteil (24) trenn- und verbindbar sind, und
mit einer dem Primärteil (23) zugeordneten Wandlereinrichtung (37),
dadurch **gekennzeichnet**,
a) daß das Bussystem (50) jeweils über separate Zuführleitungen (31, 32) für Energie und Daten mit der Steckverbindung (23, 24) in Verbindung steht,
b) daß mindestens im Primärteil (23) Begrenzereinrichtungen (34, 35; 38) für zu übertragende elektrische Größen vorgesehen sind, und
c) daß mindestens das Sekundärteil (24) dem explosionsgefährdeten Bereich zuordenbar ist.

2. Steckverbindung nach Anspruch 1,
dadurch **gekennzeichnet,**
daß der Übertrager induktiv und mit "sicherer galvanischer Trennung ausgelegt ist.

3. Steckverbindung nach einem der Ansprüche 1 bis 2,
dadurch **gekennzeichnet** ,
daß das primärseitige Gehäuse (10) der Steckverbindung in der Zündschutzart "druckfeste Kapselung d", "vergußkapselung m", in einer Kombination davon oder in einer der Zündschutzarten "p" "q" , "s" oder "o" ausgebildet ist,
daß die Zuführleitungen (31, 32) des Bussystems als 4-Draht-Leitung oder 3-Draht-Leitung ausgebildet sind, daß die Steckverbindung zur bidirektionalen Datenübertragung ausgelegt ist, und
daß das Primärteil (23) und das Sekundärteil (24) jeweils eine Modulator/Demodulator-Einrichtung (37, 41) für Daten aufweisen.

4. Steckverbindung nach einem der Ansprüche 1 bis 3,
dadurch **gekennzeichnet**,
daß das Primärteil (23) und optional auch das Sekundärteil (24) jeweils einen Transceiver (36, 43), aufweisen, und
daß das Primärteil (23) und/oder das Sekundärteil (24) einen Mikroprozessor und einen adressierbaren Speicher, insbesondere ein EEPROM, aufweisen bzw. aufweist.

5. Steckverbindung nach einem der Ansprüche 1 bis 4,
dadurch **gekennzeichnet**,
daß das Primärteil (23) eine Einrichtung (38) zur Lastüberwachung des am Sekundärteil (24) angeschlossenen Verbrauchers (44) aufweist, und
daß die Begrenzereinrichtungen (34, 35; 38) zur Begrenzung der an das Sekundärteil (24) zu übertragenden elektrischen Größen auf für die Zündschutzart "e", die Zündschutzart "i" oder andere Zündschutzarten, z.B. "m", "d", "p", "q", "s" oder "o", zulässige Werte ausgelegt ist.

6. Steckverbindung nach Anspruch 5,
dadurch **gekennzeichnet**,
daß die Einrichtung (38) zur Lastüberwachung die Energieübertragung des Primärteils (23) nur dann aktiviert, wenn ein Signal vom Sekundärteil (24) empfangen wird, welches sicherstellt, daß der angeschlossene Verbraucher (44) ordnungsgemäß arbeitet.

7. Steckverbindung nach einem der Ansprüche 1 bis 6,
dadurch **gekennzeichnet**,
daß zwischen Primär- (23) und Sekundärteil (24) ein der Zündschutzart "d" angepaßter Luftspalt (49) ausgebildet ist, und
daß eine Sicherungseinrichtung zur Überwachung des Luftspaltes (49) vorgesehen ist.

8. Steckverbindung nach einem der Ansprüche 1 bis 7,
dadurch **gekennzeichnet**,
daß das Sekundärteil (24) einen nichtflüchtigen Speicher (63) zur Speicherung einer Adresse und/oder weiterer Kenndaten der Steckverbindung und/oder des angeschlossenen Verbrauchers (44) aufweist,
daß im Sekundärteil (24) eine Überwachungseinrichtung (58) für die vom Bussystem (51) zugeführten Daten vorgesehen ist,
und daß die Überwachungseinrichtung (58) beim Empfang von an das Sekundärteil (24) der Steckverbindung adressierten Daten vom Bussystem (51) die elektronischen Bauteile des Sekundärteils (24) aktiviert.

9. Steckverbindung nach einem der Ansprüche 1 bis 8,
dadurch **gekennzeichnet**,
daß das Primärteil (23) eine in einem primärseitigen Ferritkern (4) vorgesehene Spule (5) mit einer Isolierung (68) aufweist,
daß das Sekundärteil (24) eine um einen dornartig ausgebildeten Ferritkern (1) gewickelte und von Isolierungen (3, 69) umgebene Spule (2) aufweist, und
daß der sekundärseitige Ferritkern (1) im zusammengesteckten Zustand der Steckverbindung in eine Ausnehmung des primärseitigen Ferritkerns (4) eingeführt ist, so daß die primärseitige Spule (5) und die sekundärseitige Spule (2) koaxial und im selben axialen Abschnitt angeordnet sind.

10. Steckverbindung nach Anspruch 9,
dadurch **gekennzeichnet**,
daß die Stirnseite des Primärteils (23) einen ringförmigen Aufsatz (6), welcher als Zentriereinrichtung und Abstandsteil ausgeführt ist, aus einem magnetisch schlecht leitenden Material aufweist, und
daß der dornartige sekundärseitige Ferritkern (1) einen Sockelabschnitt (7) ebenfalls aus einem magnetisch schlecht leitendem Material hat.

11. Steckverbindung nach einem der Ansprüch 1 bis 8,
dadurch **gekennzeichnet**,
daß ein primärseitiger Ferritkern (28) und ein sekundärseitiger Ferritkern (30) jeweils in Form eines Topfes mit Topfkern vorgesehen sind,
daß um den jeweiligen Topfkern jeweils eine Spule (27, 29) gewickelt ist, die isoliert und im zusammengesteckten Zustand der Steckverbindung koaxial mit ihren Stirnseiten gegeneinander ausgerichtet sind.

12. Steckverbindung nach einem der Ansprüche 9 bis 11,
dadurch **gekennzeichnet**,
daß sich der Luftspalt (49) von einem Zwischenraum (14) zwischen primärseitigem Ferritkern (4, 28) und sekundärseitigem Ferritkern (1, 30) bis zu einer Gewindeverbindung (12) oder einem anderen Verriegelungsmechanismus, z.B. einem Bajonettverschluß, zwischen einer Überwurfmutter (13) und dem primärseitigen Stekkergehäuse (21), sowie einem Zwischenraum (25) zwischen der Überwurfmutter (13) und einem sekundärseitigen Steckergehäuse (10) erstreckt.

13. Steckverbindung nach einem der vorhergehenden Ansprüche,
dadurch **gekennzeichnet**,
daß eine optische Einrichtung ( 71, 72, 75, 76, 78, 79) zur Datenübertragung zwischen Primärteil (23) und Sekundärteil (24) vorgesehen ist.

14. Steckverbindung nach Anspruch 13,
dadurch **gekennzeichnet**,
daß die optische Einrichtung im Primärteil (23) einen Lichtleitstab (71) aufweist, der mit einem Lichtleitstab (72) im Sekundärteil (24) gekoppelt ist, und
daß beidseitig Sender (75; 79) und Empfänger (76; 78) zur opto-elektronischen Datenumwandlung vorgesehen sind.

15. Steckverbindung nach Anspruch 1,
dadurch **gekennzeichnet**,
daß eine mit elektrischen Kontakten versehene Einrichtung zur Übertragung der elektrischen Größen zwischen Primärteil (23) und Sekundärteil (24) vorgesehen ist.

16. Steckverbindung nach einem der Ansprüche 1 bis 17,
dadurch **gekennzeichnet**,
daß das Bussystem (51) mindestens zwei elektrische Leitungen (31) für die Energieübertragung, mindestens zwei elektrische Leitungen (32) für die Informationsübertragung und eine Abschirmung (33) aufweist.

17. Steckverbindung nach einem der Ansprüche 1 bis 16,
dadurch **gekennzeichnet**,
daß das Bussystem (51) in Knotenpunktanordnung ausgeführt ist, und daß die Knotenpunkte Klemmen in der Zündschutzart "erhöhte Sicherheit e" oder starre Verbindungen, insbesondere Lötstellen entsprechend der Zündschutzart "erhöhte Sicherheit e", sind.

18. Energie- und Datenübertragungsverfahren für explosionsgefährdete Bereiche, bei welchem Energie und Daten über ein Bussystem zu einem Primärteil mindestens einer Steckverbindung gemäß einem der Ansprüche 1 bis 17 übertragen werden und von einem Sekundärteil der Steckverbindung zu mindestens einem Verbraucher übertragbar sind,
dadurch **gekennzeichnet**,
daß im Primärteil die Zündschutzart des angeschlossenen Verbrauchers erfaßt wird und
daß die zu übertragenden elektrischen Größen auf Maximalwerte entsprechend der erfaßten Zündschutzart begrenzt werden.

19. Energie- und Datenübertragungsverfahren nach Anspruch 18,
dadurch **gekennzeichnet**,
daß die Maximalwerte der zu übertragenden elektrischen Größen bei abgezogenem Sekundärteil auf für die Zündschutzart "Eigensicherheit i" zulässige Werte oder auf Werte für "einfache Betriebsmittel" begrenzt werden.

## Claims

1. Plug connection for a hazardous location for energy and data transmission between at least one electrical load (44) and a bus system (50),
having a primary part (23) and a secondary part (24) designed as a transmitter, the primary part (23) and secondary part (24) being separable and connectable, and
with a converter device (37) being associated with the primary part (23),
**characterized** in that
a) the bus system (50) is connected to the plug connection (23, 24) in each case via separate energy and data supply lines (31, 32),
b) at least in the primary part (23) are provided limiting means (34, 35; 38) for electrical quantities to be transmitted and
c) at least the secondary part (24) is associatable with the hazardous location.

2. Plug connection according to claim 1,
**characterized** in that
the transmitter is designed inductively with "safe galvanic separation".

3. Plug connection according to one of the claims 1 or 2,
**characterized** in that
the primary-side casing (10) of the plug connection is designed in the type of protection "pressure-tight enclosure d", "sealed enclosure m", in a combination thereof or in one of the types of protection "p", "q", "s", or "o",
that the supply lines (31, 32) of the bus system are designed as a four-wire line or a three-wire line, that the plug connection is designed for bidirectional data transmission, and
that the primary part (23) and the secondary part (24) each have a modulator-demodulator-device (37, 41) for data.

4. Plug connection according to one of the claims 1 to 3,
**characterized** in that
the primary part (23) and optionally also the secondary part (24) each have a transceiver (36, 43) and
that the primary part (23) and/or the secondary part (24) have a microprocessor and an addressable memory, particularly an EEPROM.

5. Plug connection according to one of the claims 1 to 4,
**characterized** in that
the primary part (23) has a device (38) for load monitoring of the load (44) connected to the secondary part (24) and
that the limiting means (34, 35; 38) for limiting the electrical quantities to be transmitted to the secondary part (24) are designed for values being allowed for type of protection "e", type of protection "i" or other types of protection (e.g. m, d, p, q, s, o).

6. Plug connection according to claim 5,
**characterized** in that
the load monitoring device (38) activates the energy transmission of the primary part (23) only when a signal is received from the secondary part (24) which ensures that the connected load (44) operates correctly.

7. Plug connection according to one of the claims 1 to 6,
**characterized** in that
between the primary part (23) and secondary part (24) is formed an air gap (49) adapted to the type of protection "d" and
that a protective device for monitoring the air gap (49) is provided.

8. Plug connection according to one of the claims 1 to 7,
**characterized** in that
the secondary part (24) has a non-volatile memory (63) for storing an address and/or further characteristic data of the plug connection and/or of the connected load (44),
that in the secondary part (24) a monitoring device (58) for data supplied by the bus system (51) is provided,
and that the monitoring device (58), on reception of data from the bus system (51), said data being addressed to the secondary part (24) of the plug connection, activates the electronic components of the secondary part (24).

9. Plug connection according to one of the claims 1 to 8,
**characterized** in that
the primary part (23) has a coil (5) provided in a primary-side ferrite core (4) with an insulation (68), that the secondary part (24) has a coil (2) wound around a mandrel-like ferrite core (1) and surrounded by insulation (3, 69) and
that the secondary-side ferrite core (1), in the assembled state of the plug connection, is introduced into a recess of the primary-side ferrite core (4) in such a way that the primary-side coil (5) and secondary-side coil (2) are arranged coaxially and in the same axial segment.

10. Plug connection according to claim 9,
**characterized** in that
the end face of the primary part (23) has an annular attachment (6), which is designed as a centering device and spacing part, made from a magnetically poorly conducting material, and
that the mandrel-like, secondary-side ferrite core (1) has a base segment (7) also made from a magnetically poorly conducting material.

11. Plug connection according to one of the claims 1 to 8,
**characterized** in that
a primary-side ferrite core (28) and a secondary-side ferrite core (30) in each case are provided in the form of a cup with a cup core,
that around the particular cup core in each case is wound a coil (27, 29), which is insulated and in the assembled state of the plug connection oriented coaxially with their end faces against one another.

12. Plug connection according to one of the claims 9 to 11,
**characterized** in that
the air gap (49) extends from a space (14) between the primary-side ferrite core (4, 28) and the secondary-side ferrite core (1, 30) to a threaded connection (12) or some other locking mechanism, e.g. a bayonet closure, between a box nut (13) and the primary-side plug casing (21), as well as a space (25) between the box nut (13) and a secondary-side plug casing (10).

13. Plug connection according to one of the preceding claims,
**characterized** in that
there is an optical device (71, 72, 75, 76, 78, 79) for data transmission between primary part (23) and secondary part (24).

14. Plug connection according to claim 13,
**characterized** in that
the optical device in the primary part (23) has a light-conducting rod (71) coupled to a light-conducting rod (72) in the secondary part (24), and
that on both sides there are provided transmitters (75; 79) and receivers (76; 78) for opto-electronic data conversion.

15. Plug connection according to claim 1,
**characterized** in that
there is a device, which is provided with electrical contacts, for the transmission of electrical quantities between primary part (23) and secondary part (24).

16. Plug connection according to one of the claims 1 to 15,
**characterized** in that
the bus system (51) has at least two electrical lines (31) for energy transmission, at least two electrical lines (32) for information transmission and a shield (33).

17. Plug connection according to one of the claims 1 to 16,
**characterized** in that
the bus system (51) is designed in a nodal point arrangement and
that the nodal points are terminals in the type of protection "increased safety e" or rigid connections, particularly soldered joints corresponding to the type of protection "increased safety e".

18. Method for energy and data transmission for hazardous locations, in which energy and data are transmittable by means of a bus system to a primary part of at least one plug connection according to one of the claims 1 to 17 and from a secondary part of the plug connection to at least one load,
**characterized** in that
in the primary part the type of protection of the connected load is registered and
that the electrical quantities to be transmitted are limited to maximum values corresponding to the registered type of protection.

19. Method for energy and data transmission according to claim 18,
**characterized** in that
the maximum values of the electrical quantities to be transmitted, with the secondary part removed, are limited to values allowed for the type of protection "intrinsically safe i" or to values for "simple equipment".

## Revendications

1. Connecteur pour utilisation dans des zones à risque d'explosion, destiné à transmettre de l'énergie et des données entre au moins un consommateur électrique (44) et un système bus (50), comportant
- une partie primaire (23) formée comme transmetteur et une partie secondaire (24), les parties primaire (23) et secondaire (24) pouvant être séparées ou reliées entre elles,
- et un dispositif convertisseur (37) associé à la partie primaire (23),
caractérisé en ce que
a) le système bus (50) est relié au connecteur (23, 24) par des conducteurs d'alimentation distincts (31, 32) pour l'énergie et les données respectivement,
b) au moins la partie primaire (23) contient des dispositifs de limitation (34, 35 ; 38) des grandeurs électriques à transmettre, et
c) au moins la partie secondaire (24) peut être associée à la zone à risque d'explosion.

2. Connecteur selon la revendication 1,
caractérisé en ce que
le transmetteur est du type inductif, avec « séparation galvanique sûre ».

3. Connecteur selon la revendication 1 ou 2,
caractérisé en ce que
- le boîtier (10) du côté primaire du connecteur est constitué selon le type de protection anti-allumage « capsulage résistant à la pression d » ou « capsulage scellé m », ou d'une combinaison des deux, ou selon l'un des types de protection anti-allumage « p », « q », « s » ou « o »,
- les conducteurs d'amenée (31, 32) du système bus sont à quatre ou à trois fils,
- le connecteur est conçu pour une transmission bidirectionnelle des données, et
- la partie primaire (23) et la partie secondaire (24) comportent chacune un dispositif modulateur/démodulateur (37, 41) pour les données.

4. Connecteur selon quelconque des revendications 1 à 3,
caractérisé en ce que
- la partie primaire (23) et en option également la partie secondaire (24) comportent chacune un récepteur-émetteur (36, 43), et
- la partie primaire (23) et/ou la partie secondaire (24) comporte(nt) un microprocesseur et une mémoire adressable, en particulier une EEPROM.

5. Connecteur selon l'une quelconque des revendications 1 à 4,
caractérisé en ce que
- la partie primaire (23) comporte un dispositif (38) de surveillance de charge du consommateur (44) raccordé à la partie secondaire (24), et
- les dispositifs de limitation (34, 35 ; 38) sont conçus pour limiter les grandeurs électriques à transmettre à la partie secondaire (24), aux valeurs admissibles selon le type de protection anti-allumage « e », ou le type de protection anti-allumage « i » ou d'autres types de protection anti-allumage, par exemple « m », « d », « p », « q », « s » ou « o ».

6. Connecteur selon la revendication 5,
caractérisé en ce que
le dispositif (38) de surveillance de charge active la transmission d'énergie de la partie primaire (23) seulement quand la partie secondaire (24) reçoit un signal garantissant que le consommateur (44) raccordé fonctionne normalement.

7. Connecteur selon l'une quelconque des revendications 1 à 6,
caractérisé en ce qu'
- entre la partie primaire (23) et la partie secondaire (24) se trouve une fente d'air (49) adaptée au type de protection anti-allumage « d », et
- il est prévu un dispositif de sécurité pour surveiller la fente d'air (49).

8. Connecteur selon l'une des revendications 1 à 7,
caractérisé en ce que
- la partie secondaire (24) comporte une mémoire non volatile (63) pour mémoriser une adresse et/ou d'autres caractéristiques assignées du connecteur et/ou du consommateur raccordé (44),
- il est prévu dans la partie secondaire (24) un dispositif de surveillance (58) des données amenées par le système bus (51), et
- le dispositif de surveillance (58), quand il reçoit du système bus (51) des données adressées à la partie secondaire (24) du connecteur, active les composants électroniques de cette partie secondaire (24).

9. Connecteur selon l'une quelconque des revendications 1 à 8,
caractérisé en ce que
- la partie primaire (23) comporte dans un noyau de ferrite (4) situé du côté primaire, une bobine (5) dotée d'une isolation (68),
- la partie secondaire (24) comporte une bobine (2) enroulée autour d'un noyau de ferrite (1) en forme de mandrin et enveloppée par des isolations (3, 69), et
- le noyau de ferrite (1) du côté secondaire, quand le connecteur est fiché, est introduit dans un évidement du noyau de ferrite (4) du côté primaire, de sorte que la bobine (5) du côté primaire et la bobine (2) du côté secondaire sont coaxiales et situées dans la même partie axiale.

10. Connecteur selon la revendication 9,
caractérisé en ce que
- la face frontale de la partie primaire (23) présente une garniture annulaire (6) qui est constituée comme un dispositif de centrage et comme un espaceur et qui est fait d'un matériau à faible conductibilité magnétique, et
- le noyau de ferrite (1) en forme de manchon, situé du côté secondaire, présente une partie formant socle (7), faite également d'un matériau à faible conductibilité magnétique.

11. Connecteur selon l'une quelconque des revendications 1 à 8,
caractérisé en ce qu'
- il comporte un noyau de ferrite (28) du côté primaire et un noyau de ferrite (30) du côté secondaire, tous deux en forme de pot comportant un noyau en pot, et
- autour de chaque noyau en pot une bobine (27, 29) est enroulée, les bobines ayant leurs faces frontales l'une en face de l'autre, isolées et coaxiales lorsque le connecteur est fiché.

12. Connecteur selon l'une quelconque des revendications 9 à 11,
caractérisé en ce que
la fente d'air (49) part d'un espace intermédiaire (14) séparant le noyau de ferrite (4, 28) du côté primaire et le noyau de ferrite (1, 30) du côté secondaire, elle se poursuit jusqu'à une liaison filetée (12) ou un autre mécanisme de verrouillage, par exemple un verrouillage à baïonnette, situé entre un écrou de raccordement (13) et le boîtier de connecteur (21) du côté primaire, et jusqu'à l'espace intermédiaire (25) séparant l'écrou de raccordement (13) et le boîtier de connecteur (10) du côté secondaire.

13. Connecteur selon l'une quelconque des revendications précédentes,
caractérisé en ce qu'
il est prévu une installation optique (71, 72, 75, 76, 78, 79) pour la transmission de données entre la partie primaire (23) et la partie secondaire (24).

14. Connecteur selon la revendication 3,
caractérisé en ce que
l'installation optique présente, dans la partie primaire (23), une barrette conductrice de lumière (71) accouplée à une barrette conductrice de lumière (72) située dans la partie secondaire (24), des émetteurs (75 ; 79) et des récepteurs (76 ; 78) étant prévus des deux côtés pour un échange optoélectronique de données.

15. Connecteur selon la revendication 1,
caractérisé en ce qu'
il est prévu un dispositif équipé de contacts électriques pour transmettre des grandeurs électriques entre la partie primaire (23) et la partie secondaire (24).

16. Connecteur selon l'une des revendications 1 à 15,
caractérisé en ce que
le système bus (51) comporte au moins deux conducteurs électriques (31) pour transmettre l'énergie, au moins deux conducteurs électriques (32) pour transmettre l'information, ainsi qu'un blindage (33).

17. Connecteur selon l'une quelconque des revendications 1 à 16,
caractérisé en ce que
le système bus (51) est un système à points nodaux, ces points étant des bornes de connexion du type à protection anti-allumage « sécurité élevée e », ou des liaisons rigides, en particulier des points de brasure du type à protection anti-allumage « sécurité élevé e ».

18. Procédé de transmission d'énergie et de données pour utilisation dans des zones à risque d'explosion, dans lequel de l'énergie et des données sont transmises par un système bus à une partie primaire d'au moins un connecteur mâle-femelle selon l'une quelconque des revendications 1 à 17, et peuvent être transmises par une partie secondaire du connecteur à au moins un consommateur,
caractérisé en ce que
- dans la partie primaire est détecté le type de protection anti-allumage du consommateur raccordé, et
- les grandeurs électriques à transmettre sont limitées à des valeurs maximales correspondant au type de protection anti-allumage détecté.

19. Procédé de transmission d'énergie et de données selon la revendication 18,
caractérisé en ce que
les valeurs maximales des grandeurs électriques à transmettre à partir de la partie secondaire sont limitées à des valeurs admissibles dans le type de protection anti-allumage « sécurité propre i » ou à des valeurs pour « moyens de fonctionnement simples ».
